# EUROPEAN PATENT APPLICATION

(11) **EP 0 744 826 A1**
(43) Date of publication of application: **27.11.1996**
(21) Application number: 95303544.1
(22) Date of filing: 25.05.1995
(51) Int. Cl.: H02P 9/48, H02M 7/219, H02M 7/155

(54) **Alternator systems**

(71) Applicant: Smiths Industries Public Limited Company, London, NW11 8DS (GB)
(72) Inventor: Stephens, John, Basingstoke, Hampshire RG24 8XF (GB)
(74) Representative: Flint, Jonathan McNeill

(57) **Abstract**

An alternator system has two pairs of diodes 21 and 22, and 23 and 24 connected between respective outputs 11 and 12 of an alternator 1 and respective outputs 4 and 5 of the system, the diodes being connected in opposite senses. A switch 32 and 34 is connected in shunt across each of the diodes connected to the zero volts output 5 of the system. The switches 32 and 34 are controlled by a control unit 3, which receives a sample of the signal appearing at the other output. The output voltage of the system is reduced by closing the switches 32 and 34 in phase with the output voltage while current is being supplied to the positive output 4 of the system. The output voltage is increased by closing the switches 32 and 34 while current is not being supplied to the positive output 4 and opening the switches 32 and 34 after current starts to be supplied to the positive output so that energy stored in the alternator 1 is transferred to the system output.

## Description

This invention relates to alternator systems of the kind having first and second outputs, an alternator having first and second outputs, and two pairs of rectifiers, the first output of the alternator being connected to the first output of the system via a first rectifier of one pair and being connected to the second output of the system via a second rectifier of the one pair, the first and second rectifiers being connected in opposite senses, the second output of the alternator being connected to the first output of the system via a third rectifier in the second pair and being connected to the second output of the system via a fourth rectifier in the second pair, and the third and fourth rectifiers being connected in opposite senses,.

Permanent magnet alternators can produce single-phase, three-phase or multi-phase outputs in the form of an ac voltage waveform. Diodes or other rectifiers at the output of the alternator are used to rectify the output signal and produce a dc output.

It is an object of the present invention to provide an alternator system in which the output voltage can be controlled readily.

According to one aspect of the present invention there is provided an alternator system of the above-specified kind, characterised in that the system includes first and second switches connected in shunt across the second and fourth rectifiers respectively, and a control unit that controls switching of the first and second switches such as thereby to control the output voltage of the system..

The second output of the system may be at zero volts and the first output of the system at a positive value. The control unit may control the first and second switches in synchronism with a voltage in the system. The control unit is preferably connected to receive a sample of the signal at the first output of the system, the control unit controlling the first and second switches in synchronism with the output voltage. The control unit may close the first switch for a part at least of the time that current is being supplied to the first output via the first rectifier and to close the second switch for a part at least of the time that current is being supplied to the first output via the third rectifier so as to reduce the output voltage of the system.

Alternatively, the control unit closes the first switch for a part at least of the time that the current is not being supplied to the first output via the first rectifier and opens the switch some time after current starts to flow through the first rectifier, the control unit closing the second switch for a part at least of the time that the current is not being supplied to the first output via the third rectifier and opens the switch some time after current starts to flow through the third rectifier so that energy stored in the alternator and its associated wiring is transferred to the system output when the first and second switches are opened and the voltage output of the system is thereby increased.

The control unit may be adjustable to close each switch for a period starting between a time at which current is being supplied to the first output of the system via the first and third rectifiers and a time at which current is not being supplied to the first output of the system and finishing at a time when current starts to flow through the first and third rectifiers so that the output voltage of the system can be both reduced and increased.

The rectifiers may be diodes and the switching means MOSFETs. The alternator may have a third output and the system have a third pair of fifth and sixth rectifiers, the third alternator output being connected to the first output of the system via the fifth rectifier and to the second output of the system via the sixth rectifier, the fifth and sixth rectifiers being connected in opposite senses, a third switching means connected across the sixth rectifier, and the control unit controlling switching of the third switch.

An alternator system according to the present invention, will now be described, by way of example, with reference to the accompanying drawings, in which:
- Figure 1: shows the system schematically;
- Figures 2 and 3: illustrate waveforms at different parts of the system;
- Figures 4 and 5: illustrate one mode of switching of two switches in the system;
- Figures 6 to 9: illustrate alternative modes of switching of the switches; and
- Figure 10: shows a modified system schematically.

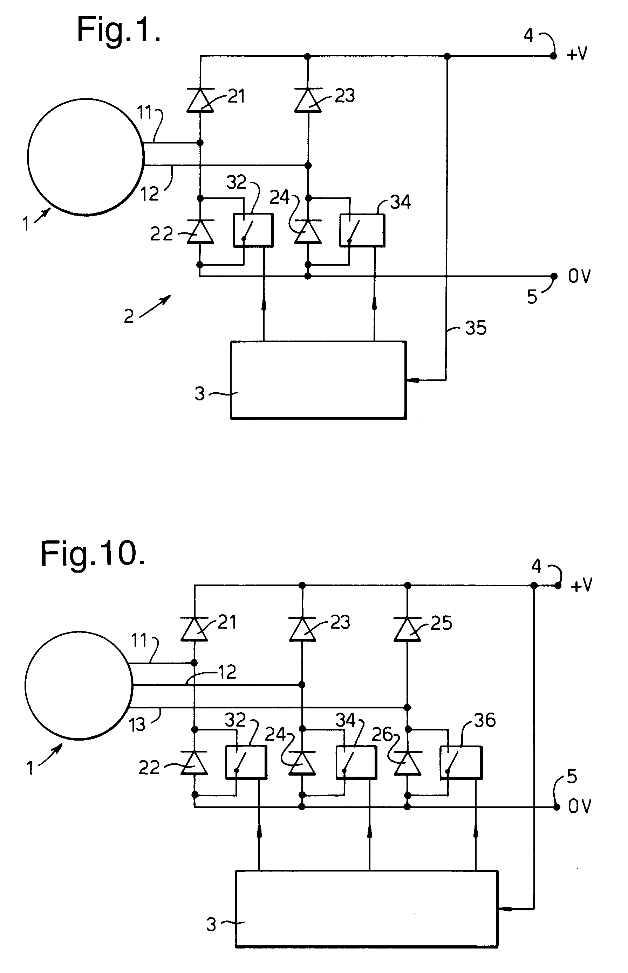

With reference to Figure 1, the system includes a permanent magnet alternator 1, a rectifier bridge circuit 2, connected between the alternator and the output of the system, and a control unit 3.

The alternator 1 is of conventional construction and, in the example illustrated, is single-phase and has a synchronous reactance. The alternator has two output lines 11 and 12, which have their own inductance. Alternatively, or additionally, a separate inductance may be connected in the output lines 11 and 12.

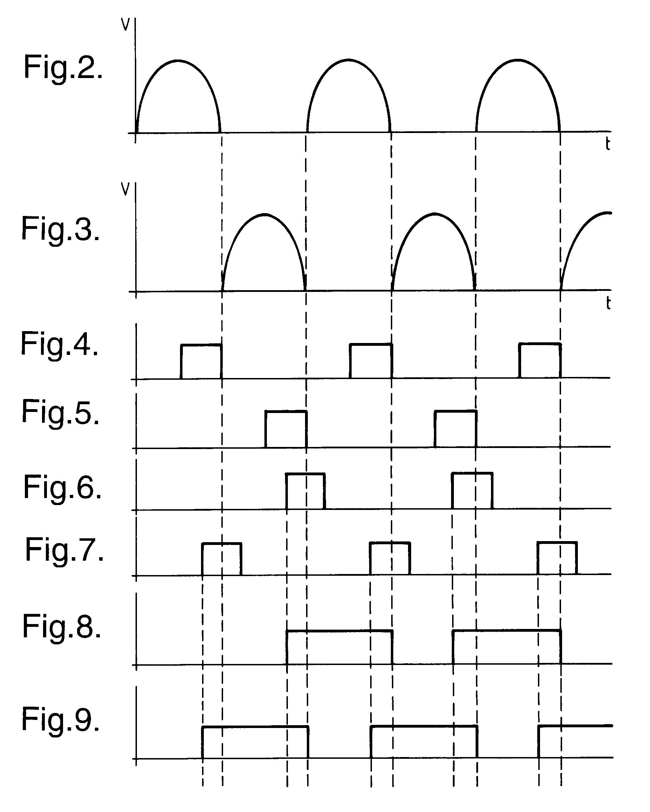

The rectifier bridge circuit 2 has two pairs of diodes or other rectifiers 21 and 22, and 23 and 24. The anode of the first diode 21 of the first pair is connected to the alternator output line 11 and its cathode is connected to a positive voltage output 4 of the system, so that positive voltage excursions on line 11 appear at the output 4. The voltage at the cathode of the diode 21 is represented in Figure 2. The second diode 22 of the first pair is also connected to line 11 but in the opposite sense and its anode is connected to a second, zero voltage output 5 of the system so that only negative voltage excursions are supplied to this output. The anode of the third diode 23 in the second pair is connected to the second alternator output line 12 and its cathode is connected to the first output 4. The voltage at the cathode of the diode 23 is represented in Figure 3. The fourth diode 24 in the second pair is also connected to the alternator output line 12 but in the opposite sense and its anode is connected to the second output 5. In this way, positive voltage excursions on line 12 appear at the first output 4 whereas negative voltage excursions are applied to the other second 5 so that a dc output is produced.

The system also includes first and second switches 32 and 34 connected in shunt across the diodes 22 and 24 respectively. The switches 32 and 34 can be of any conventional kind, such as, field effect transistors (MOSFET's), gate turn-off thyristors (GTO's), insulated gate bipolar junction transistors (IGBT's) or MOSFET-controlled thyristors (MCT's). The switches 32 and 34 are connected to the control unit 3, which controls their switching. The control unit 3 also receives, via line 35, a sample of the first output on line 4.

The system has several possible different modes of operation according to the control of the output voltage that is required. If both switches 32 and 34 are left open, the system will provide an output of the same kind as in conventional systems.

When it is desired to reduce the value of the output voltage of the system, the control unit 3 opens and closes the switches 32 and 34 in synchronism with the output voltage. More particularly, the first switch 32 is closed at some point during the positive voltage excursion on line 11 and remains closed until the current flowing through the switch falls to zero, as shown in Figure 4, where a high value represents a closed switch. The switches 32 and 34 may be of the kind that automatically open when current flow falls to zero. Alternatively, the switches could be opened by monitoring current flow or from knowledge of the time period of the output signal. If the period of the output signal were P, the full duration of the positive voltage excursion on line 11 would be P/2. Thus, if the switch were closed at a time t it would remain closed for a period P/2 - t. The value of the output voltage can be adjusted by controlling the time at which the switch 32 is closed. If the switch were only closed at a time t that was approximately equal to P/2 then the reduction in output voltage would be relatively small. If, however, the output voltage needed to be reduced by greater amounts, the switch 32 would be closed closer to the start of the positive voltage excursion, when t had a low value. The second switch 34 is similarly closed at the corresponding point during the positive voltage excursion on line 12, as shown in Figure 5.

The control unit 3 can also be adjusted to increase the output voltage above the normal maximum value. To do this, the first switch 32 is closed at a time when no current is being supplied to the output 4 from line 11 and remains closed until some time her the start of the next positive voltage excursion, as shown in Figure 6. Similarly, the second switch 34 is closed at a time when no current is being supplied to the output from line 12 and is opened some time alter current flow is resumed, as shown in Figure 7. The effect of this is to store energy in the synchronous reactance of the alternator and in the inductance of the lines 11 and 12. When the switches 32 and 34 open, the stored energy is transferred to the first output 4 with the effect of boosting the rectified output voltage. As described, the switches 32 and 34 are controlled in synchronism and at the same frequency as the ac voltage waveform. It is possible, however, for the switches 32 and 34 to be controlled at a higher or lower frequency than that of the ac voltage waveform so that the boost in the rectified output voltage can be further controlled.

If instead, the switches 32 and 34 were left closed until current flow fell back to zero, as shown in Figure 8 and 9, this would stop supply of current to the output and redirect it back to the other phase. The energy stored in the synchronous reactance of the alternator 1 and the inductance of the lines 11 and 12 is allowed to dissipate and is not transferred to the output.

The invention is not confined to single-phase alternators but can be used with three-phase alternators having three outputs 11, 12 and 13, as illustrated in Figure 10, where three pairs of diodes 21 and 22, 23 and 24, and 25 and 26 are used with three switches 32, 34 and 36. The fifth diode 25 is connected between the third output 13 of the alternator 1 and the first system output 4, whereas the sixth diode 26 is connected between the third alternator output and the second system output 5, the two diodes 25 and 26 being connected in opposite senses. The third switch 36 is connected in shunt across the sixth diode 26. The invention could also be used in other multi-phase alternators.

## Claims

1. An alternator system having first and second outputs (4 and 5), an alternator (1) having first and second outputs (11 and 12), and two pairs of rectifiers (21 to 24), the first output (11) of the alternator being connected to the first output (4) of the system via a first rectifier (21) of one pair and being connected to the second output (5) of the system via a second rectifier (22) of the one pair, the first and second rectifiers being connected in opposite senses, the second output (12) of the alternator being connected to the first output (4) of the system via a third rectifier (23) in the second pair and being connected to the second output (5) of the system via a fourth rectifier (24) in the second pair, and the third and fourth rectifiers being connected in opposite senses, characterised in that the system includes first and second switches (32 and 34) connected in shunt across the second and fourth rectifiers (22 and 24) respectively, and a control unit (3) that controls switching of the first and second switches (32 and 34) such as thereby to control the output voltage of the system.

2. An alternator system according to Claim 1, characterised in that the second output (5) of the system is at zero volts and the first output (4) of the system is at a positive value.

3. An alternator system according to Claim 1 or 2, characterised in that the control unit (3) controls the first and second switches (32 and 34) in synchronism with a voltage in the system.

4. An alternator system according to Claim 3, characterised in that the control unit (3) is connected to receive a sample of the signal at the first output (4) of the system, and that the control unit controls the first and second switches (32 and 34) in synchronism with the output voltage.

5. An alternator system according to any one of the preceding claims, characterised in that the control unit (3) closes the first switch (32) for a part at least of the time that current is being supplied to the first output (4) via the first rectifier (21) and closes the second switch (34) for a part at least of the time that current is being supplied to the first output (4) via the third rectifier (21) so as to reduce the voltage output of the system.

6. An alternator system according to any one of Claims 1 to 4, characterised in that the control unit (3) closes the first switch (32) for a part at least of the time that the current is not being supplied to the first output (4) via the first rectifier (21) and opens the switch (32) some time after current starts to flow through the first rectifier, and that the control unit (3) closes the second switch (34) for a part at least of the time that the current is not being supplied to the first output (4) via the third rectifier (23) and opens the switch (34) some time after current starts to flow through the third rectifier (23) so that energy stored in the alternator (1) and its associated wiring (11,12) is transferred to the system output (4) when the first and second switches (32 and 34) are opened and the voltage output of the system is thereby increased.

7. An alternator system according to any one of Claims 1 to 4, characterised in that the control unit (3) is adjustable to close each switch (32 and 34) for a period starting between a time at which current is being supplied to the first output (4) of the system via the first and third rectifiers (21 and 23) and a time at which current is not being supplied to the first output of the system and finishing at a time when current starts to flow through the first and third rectifiers (21 and 23) so that the output voltage of the system can be both reduced and increased.

8. An alternator system according to any one of the preceding claims, characterised in that the rectifiers are diodes (21 to 24).

9. An alternator system according to any one of the preceding claims, characterised in that the switches are MOSFETs (32 and 34).

10. An alternator system according to any one of the preceding claims, characterised in that the alternator (1) has a third output (13) and the system has a third pair of fifth and sixth rectifiers (25 and 26), that the third alternator output (13) is connected to the first output (4) of the system via the fifth rectifier (25) and to the second output (5) of the system via the sixth rectifier (26), the fifth and sixth rectifiers (25 and 26) being connected in opposite senses, that a third switch (36) is connected across the sixth rectifier (26), and that the control unit (3) controls switching of the third switch.
